# EUROPEAN PATENT APPLICATION

(11) **EP 3 609 074 A1**
(43) Date of publication of application: **12.02.2020**
(21) Application number: 19188055.8
(22) Date of filing: 24.07.2019
(51) Int. Cl.: H02P 5/46

(54) **MOTOR DRIVE APPARATUS**

(30) Priority: 08.08.2018 JP 2018149001
(71) Applicant: KONICA MINOLTA, INC., Tokyo 100-7015 (JP)
(72) Inventor: Shirakuma, Takumi, Tokyo, 100-7015 (JP); Kodama, Hirokatsu, Tokyo, 100-7015 (JP); Mine, Hidenori, Tokyo, 100-7015 (JP); Ogura, Keigo, Tokyo, 100-7015 (JP); Izumiya, Kenji, Tokyo, 100-7015 (JP)
(74) Representative: Hoffmann Eitle

(57) **Abstract**

A motor drive apparatus (1) drives and controls a plurality of motors (Ml, M2) that rotate a common drive shaft (3). The motor drive apparatus includes a motor drive hardware processor (10) that outputs equal drive power to each of the plurality of motors, and manipulates the drive power with a rotational speed detection signal of any one of the plurality of motors as a feedback signal. The feedback signal is switched based on conditions such as responsiveness and efficiency.

## Description

### BACKGROUND

### Technological Field

The present invention relates to a motor drive apparatus.

### Description of the Related Art

Conventionally, as disclosed in Japanese Patent Laid-Open Nos. 2009-213190, 2003-199395 and 2003-33084, there are techniques of rotationally driving a common load (drive shaft) by two motors. In the techniques disclosed in the patent documents, drive power is generated based on signals, which are controlled respectively for two motors on the basis of information from a sensor (encoder) that detects a rotation of the load (output shaft) for the purpose of reducing backlashes, and the two motors are driven.

The above prior arts use two servomotors and two controllers corresponding to the servomotors to control the gear phase into a specific condition.

However, since the servomotors and encoder are used, the costs are high, and an installation space and a connection structure for the encoder are required, resulting in upsizing and complication.

In the case where a common drive shaft is rotationally driven by two motors, if feedback systems corresponding to the respective motors are independent of each other, torque interference occurs between the motors, the fluctuation of speed is large, and the output efficiency is decreased.

In the case where the feedback system is configured only for one of the motors, the one motor fluctuates excessively and a drive force to the load is not stable, and the one motor has severe abrasion and deterioration of the gear and is easily broken.

### SUMMARY

The present invention has been made in view of the above problems of the prior art, and aims to achieve a smooth operation and efficient driving by balancing a plurality of motors, while avoiding a cost increase and mechanical limitations, in driving and controlling the plurality of motors that rotate a common drive shaft.

To solve at least one of the above problems, according to an aspect of the present invention, a motor drive apparatus which drives and controls a plurality of motors that rotate a common drive shaft, includes a motor drive hardware processor that outputs equal drive power to each of the plurality of motors, and manipulates the drive power with a rotational speed detection signal of any one of the plurality of motors as a feedback signal.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention.
Fig. 1 is a circuit block diagram of a motor drive apparatus according to one embodiment of the present invention, and a schematic diagram of a rotation drive mechanism with two motors;
Figs. 2A and 2B are waveform diagrams showing rotational speed fluctuations of one motor when the two motors were activated, in which Fig, 2A shows the fluctuation at the initial stage, and Fig. 2B shows the fluctuation after aging degradation;
Fig. 3 is a flowchart of a control switching sequence according to switching control example 2;
Fig. 4 is a waveform diagram according to switching control example 2, showing rotational speed fluctuations of one motor when the two motors were activated;
Fig. 5 is a waveform diagram according to switching control example 2, showing rotational speed fluctuations of the other motor when the two motors were activated;
Fig. 6 is a flowchart of a control switching sequence according to switching control example 3;
Fig. 7 is a waveform diagram according to switching control example 3, showing fluctuations of rotational speed and drive power of one motor when the two motors were activated; and
Fig. 8 is a waveform diagram according to switching control example 3, showing fluctuations of rotational speed and drive power of the other motor when the two motors were activated.

### DETAILED DESCRIPTION OF EMBODIMENT

Hereinafter, one embodiment of the present invention will be described with reference to the drawings. However, the scope of the invention is not limited to the disclosed embodiment.

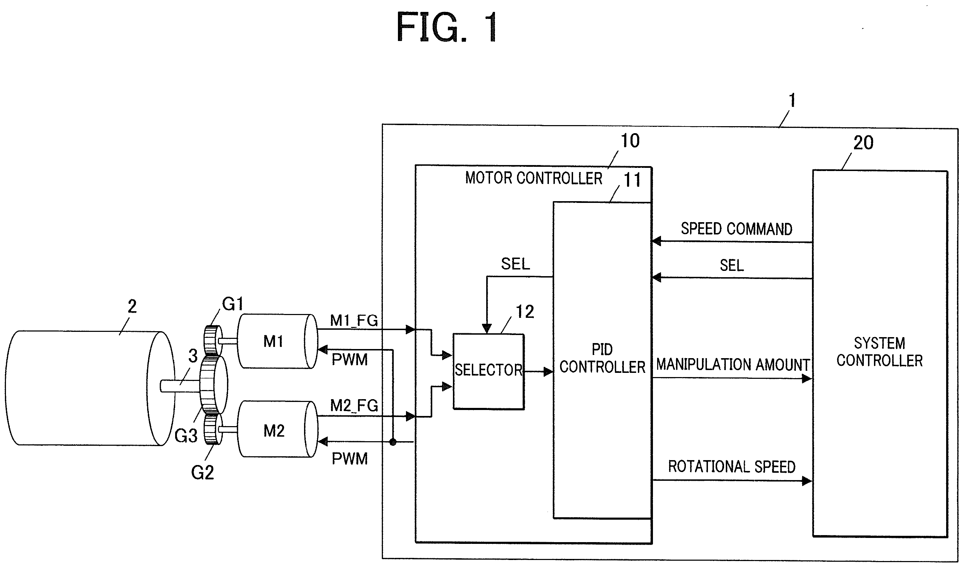

As shown in Fig. 1, a motor drive apparatus 1 of the present embodiment drives and controls two motors M1 and M2 that rotate a common drive shaft 3. For example, as shown in Fig. 1, the two motors M1 and M2 are connected to the drive shaft 3 by a transmission mechanism in which gears G1 and G2 fixed to output shafts of the respective motors are meshed and connected with a gear G3 fixed to the drive shaft 3. However, this transmission mechanism is an example and is not a limitation. For example, a reduction gear may be added.

The drive shaft 3 and a roller 2 are coaxially integrated. The roller 2, the drive shaft 3 and the gear G3 are a common load.

The motor drive apparatus 1 includes a motor drive controller 10, and a system controller 20.

The motor drive controller 10 includes a motor drive power amplifier that outputs PWM-type drive power to the motors M1 and M2, and outputs equal drive power PWM to each of the two motors M1 and M2.

A rotational speed detection signal M1_FG output from the motor M1 and a rotational speed detection signal M2_FG output from the motor M2 are input to the motor drive controller 10.

The motor drive controller 10 includes a PID controller 11. A rotational speed detection signal which is switched by a selector 12 to the rotational speed detection signal M1_FG or M2 FG of one of the two motors is input as a feedback signal to the PID controller 11, and the PID controller 11 performs feedback control (PID control) to manipulate the drive power PWM. The motor drive controller 10 can switch the feedback signal between the rotational speed detection signals of the two motors M1 and M2 by the operation of the selector 12 according to a selection signal SEL output from the PID controller 11.

A speed command signal which specifies a target value of the feedback control (PID control) and the selection signal SEL are input to the PID controller 11 from the system controller 20.

A manipulation amount (duty ratio) of the drive power (PWM) in the feedback control (PID control) and the feedback signal (rotational speed detection signal) are input to the system controller 20 from the PID controller 11.

The system controller 20 outputs the speed command signal and the selection signal SEL to the PID controller 11 to execute drive control of the motors M1 and M2, and also determines the selection signal SEL by calculation processing based on information input from the PID controller 11 at the time of drive control of the motors M1 and M2. Specific control examples are given below.

### (1) Switching Control Example 1

In switching control example 1, switching is performed when the cumulative number of times of activation or stop of the motors M1 and M2 exceeds a predetermined value.

The system controller 20 accumulates the number of times of activation of the motors M1 and M2, based on the speed command signal or the feedback signal (rotational speed detection signal).

The system controller 20 switches the selection signal SEL when the cumulative number of times of activation of the motors M1 and M2 exceeds the predetermined value.

That is, in the control in which the rotational speed detection signal M1_FG of the motor M1 is selected as the feedback signal, when the cumulative number of times of activation of the motors M1 and M2 exceeds the predetermined value, the system controller 20 switches to a selection signal SEL that uses the rotational speed detection signal M2_FG of the motor M2 as the feedback signal. Accordingly, the PID controller 11 inputs the selection signal SEL to the selector 12, and switches the feedback signal to the rotational speed detection signal M2_FG of the motor M2.

Similarly, in the control in which the rotational speed detection signal M2_FG of the motor M2 is selected as the feedback signal, when the cumulative number of times of activation of the motors M1 and M2 exceeds the predetermined value, the system controller 20 switches to a selection signal SEL that uses the rotational speed detection signal M1_FG of the motor M1 as the feedback signal. Accordingly, the PID controller 11 inputs the selection signal SEL to the selector 12, and switches the feedback signal to the rotational speed detection signal M1_FG of the motor M1.

Instead of the cumulative number of times of activation, switching may be performed based on the cumulative number of times of stop, or the cumulative number of times of both of activation and stop.

As described above, by switching the feedback signal every fixed cumulative number of times of driving, it is possible to balance the two motors M1 and M2 and maintain smooth and efficient driving.

### (2) Switching Control Example 2

In switching control example 2, the feedback signal is switched to a rotational speed detection signal which, when selected as the feedback signal between the rotational speed detection signals of the two motors M1 and M2, provides better responsiveness.

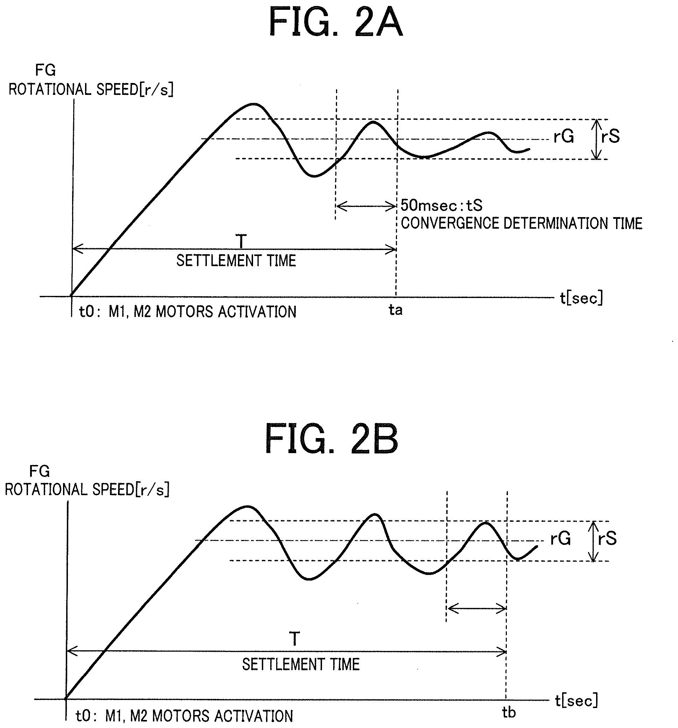

The rotational speed of the motors M1 and M2 at the time of activation fluctuates as shown in Fig. 2A. As shown in Fig. 2A, speed ripples occur, that is, overshoot and undershoot of the rotational speed are repeated. The amplitude of the speed ripple decreases gradually, and the rotational speed converges to a target rotational speed rG.

Since load conditions change depending on aging degradation such as wear of gears, the maximum amplitude of the speed ripple increases, and a settling time T until the speed ripples converges to a certain range extends as shown in Fig. 2B. The settling time T is, for example, up to a time point at which the rotational speed detection signal (FG) falls within a predetermined convergence range rS (for example, ±5%) centered on the target rotational speed rG, continuously for a predetermined convergence determination time tS (for example, 50 msec) (time point ta in Fig. 2A and time point tb in Fig. 2B). The start point of the settling time T is activation start time t0.

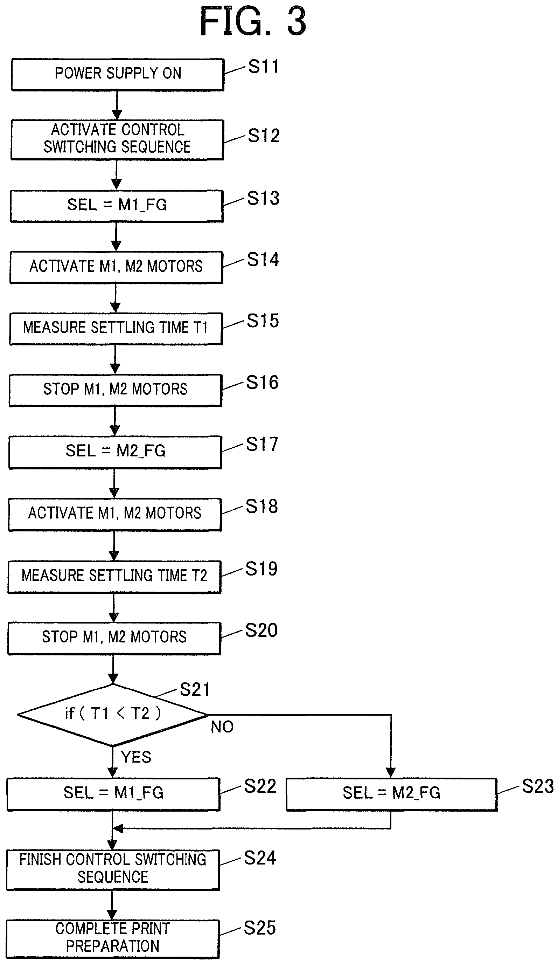

The system controller 20 executes the following control switching sequence which determines a selection signal SEL by judging whether the responsiveness is good or poor based on the length of the settling time T. The following is an example in which the control switching sequence is executed upon turning on the power supply, and the control switching sequence may be executed at other time such as a standby time. In addition, a case where the motor drive apparatus 1 is incorporated into a printer is given as an example. Refer to the flowchart of Fig. 3.

When the power supply is ON by turning on the main power supply of the printer (S11), the system controller 20 activates the control switching sequence that is one of print preparation processing (S12), and firstly causes the rotational speed detection signal M1_FG of the motor M1 to be selected as the feedback signal by inputting a selection signal SEL which uses the rotational speed detection signal M1_FG of the motor M1 as the feedback signal to the PID controller 11 (S13).

Then, the system controller 20 inputs a speed command (target rotational speed) to the PID controller 11 and rotationally activates the motors M1 and M2 simultaneously (S14).

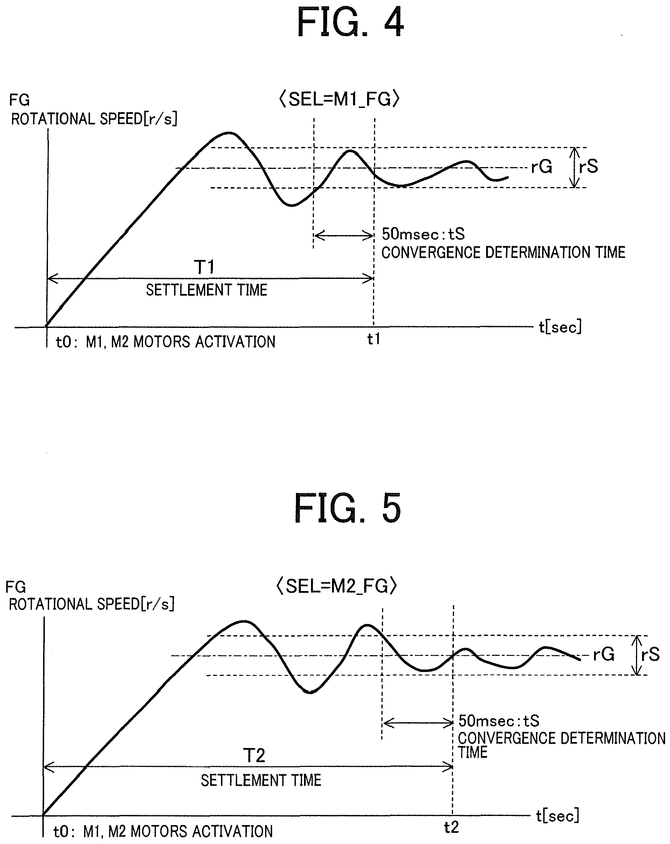

The system controller 20 measures the settling time T1 visualized in Fig. 4, based on the rotational speed detection signal (FG signal) returned from the PID controller 11 (S15). The settling time T1 (corresponding to a segment t0 to t1 in Fig. 4) is the settling time when the rotational speed detection signal M1_FG of the motor M1 is the feedback signal.

When the measurement of the settling time T1 is finished, the system controller 20 inputs a speed command (target rotational speed: 0) to the PID controller 11 and stops both of the motors M1 and M2 (S16).

Next, the system controller 20 causes the rotational speed detection signal M2_FG of the motor M2 to be selected as the feedback signal by inputting a selection signal SEL which uses the rotational speed detection signal M2_FG of the motor M2 as the feedback signal to the PID controller 11 (S17).

Then, the system controller 20 inputs a speed command (the same target rotational speed as in S14) to the PID controller 11 and rotationally activates the motors M1 and M2 simultaneously (S18).

The system controller 20 measures a settling time T2 visualized in Fig. 5, based on the rotational speed detection signal (FG signal) returned from the PID controller 11 (S19). The settling time T2 (corresponding to a segment t0 to t2 in Fig. 5) is the settling time when the rotational speed detection signal M2_FG of the motor M2 is the feedback signal.

When the measurement of the settling time T2 is finished, the system controller 20 inputs a speed command (target rotational speed: 0) to the PID controller 11 and stops both of the motors M1 and M2 (S20).

Next, if the settling time T2 is longer than the settling time T1 (YES in S21), the system controller 20 determines a selection signal which uses the rotational speed detection signal M1_FG of the motor M1 as the feedback signal (S22), or if the settling time T1 is longer than the settling time T2 (NO in S21), the system controller 20 determines a selection signal which uses the rotational speed detection signal M2_FG of the motor M2 as the feedback signal (S23), and finishes the control switching sequence (S24). In the example shown in Fig. 4 and Fig. 5, a selection signal which uses the rotational speed detection signal M1_FG of the motor M1 as the feedback signal is determined.

The system controller 20 executes all the print preparation processing and moves into a print preparation completed state (S25).

The system controller 20 inputs the selection signal determined in step S22 or S23 to the PID controller 11 and causes the rotational speed detection signal according to the selection signal to be selected as the feedback signal until the next control switching sequence is performed, and the PID controller 11 controls driving of the motors M1 and M2 involved in a printing operation and the like.

As described above, by switching the feedback signal to the rotational speed detection signal which provides better responsiveness, it is possible to balance the two motors M1 and M2 and maintain smooth and efficient driving.

In the above example, although the responsiveness is judged by the length of the settling time T, a judgement may be made based on other index. For example, if there are one overshoot and one undershoot after activation, the maximum amplitude can be measured and may be used as a judgment index. Further, if there is one overshoot after activation, an overflow amount with respect to the target rotational speed rG can be measured and may be used as a judgment index.

### (3) Switching Control Example 3

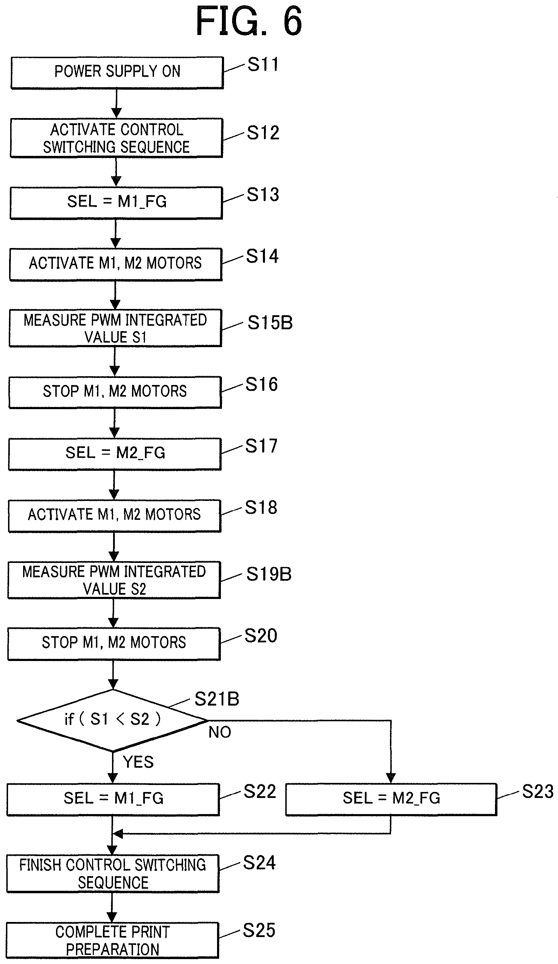

In switching control example 3, the feedback signal is switched to a rotational speed detection signal which, when selected as the feedback signal between the rotational speed detection signals of the two motors M1 and M2, has a smaller integrated value of the drive power until reaching a target rotational speed from a predetermined rotational speed (0 in this example). Refer to the flowchart of Fig. 6. The same steps as in switching control example 2 described above are labelled with the same reference numerals, and descriptions thereof are omitted.

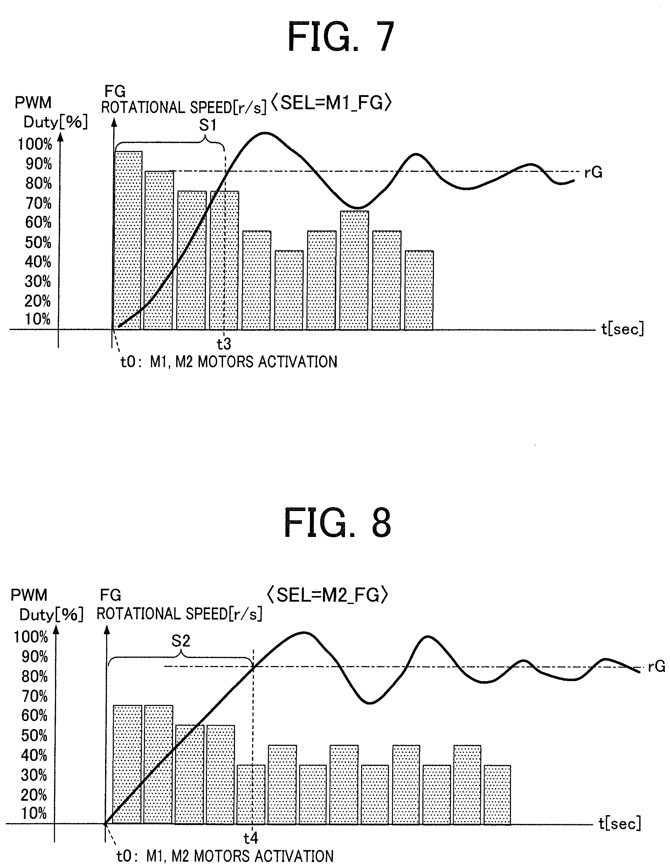

As shown in Fig. 6, after step S14, the system controller 20 measures an integrated value S1 of drive power PWM visualized in Fig. 7, based on the manipulation amount (duty ratio) returned from the PID controller 11 (S15B). The integrated value S1 corresponds to the time integrated value of the duty ratio in a segment t0 to t3 in Fig. 7, and is the integrated value when the rotational speed detection signal M1_FG of the motor M1 is the feedback signal.

Similarly, after step S18, the system controller 20 measures an integrated value S2 of drive power PWM visualized in Fig. 8, based on the manipulation amount (duty ratio) returned from the PID controller 11 (S19B). The integrated value S2 corresponds to the time integrated value of the duty ratio in a segment t0 to t4 in Fig. 8, and is the integrated value when the rotational speed detection signal M2_FG of the motor M2 is the feedback signal.

If the integrated value S2 is larger than the integrated value S1 (YES in S21B), the system controller 20 determines a selection signal which uses the rotational speed detection signal M1_FG of motor M1 as the feedback signal (S22), or if the integrated value S1 is larger than integrated value S2 (NO in S21 B), the system controller 20 determines a selection signal which uses the rotational speed detection signal M2_FG of the motor M2 as the feedback signal (S23), and finishes the control switching sequence (S24). In the example shown in Fig. 7 and Fig. 8, a selection signal which uses the rotational speed detection signal M2 FG of the motor M2 as the feedback signal is determined.

Others are the same as in the above-described switching control example 2.

As described above, by switching the feedback signal to the rotational speed detection signal which has a smaller integrated value of the drive power, it is possible to balance the two motors M1 and M2 and maintain smooth and efficient driving.

In the above embodiment, the number of a plurality of motors that rotate the common drive shaft is two, but the present invention may be implemented with three or more motors. In this case, the present invention may be implemented by measuring the settling time and the integrated value of the drive power when the rotational speed detection signal of each of the motors is used as the feedback signal and selecting a rotational speed detection signal having the shortest settling time or the smallest integrated value of the drive power. The present invention may also be implemented in a manner similar to the above-described embodiment by randomly selecting two out of three or more rotational speed signals every time the control switching sequence is executed.

According to the embodiment of the present invention, equal drive power is output to each of a plurality of motors, and the drive power is manipulated using the rotational speed detection signal of any one of the plurality of motors as the feedback signal. Therefore, an encoder for detecting a rotation of the common drive shaft is not necessary, a smooth operation is achieved with equal drive power, and driving can be efficiently performed by balancing the plurality of motors.

Further, by switching the feedback signal between the rotation detection signals of the plurality of motors, smooth and efficient driving can be maintained.

Although the embodiment of the present invention has been described and illustrated in detail, the disclosed embodiment is made for purposes of illustration and example only and not limitation. The scope of the present invention should be interpreted by terms of the appended claims.

## Claims

1. A motor drive apparatus (1) that drives and controls a plurality of motors (M1, M2) that rotate a common drive shaft (3), the motor drive apparatus comprising a motor drive hardware processor (10) that outputs equal drive power to each of the plurality of motors, and manipulates the drive power with a rotational speed detection signal of any one of the plurality of motors as a feedback signal.

2. The motor drive apparatus according to claim 1, wherein the feedback signal is switchable between rotational speed detection signals of the plurality of motors.

3. The motor drive apparatus according to claim 2, comprising a hardware processor (20) that, in response to a cumulative number of times of activation and/or stop of the plurality of motors exceeds a predetermined value, switches the feedback signal between the rotational speed detection signals of the plurality of motors.

4. The motor drive apparatus according to claim 2, comprising a hardware processor (20) that switches the feedback signal to a rotational speed detection signal which, when selected as the feedback signal out of the rotational speed detection signals of the plurality of motors, provides better responsiveness.

5. The motor drive apparatus according to claim 2, comprising a hardware processor (20) that switches the feedback signal to a rotational speed detection signal which, when selected as the feedback signal out of the rotational speed detection signals of the plurality of motors, has a smaller integrated value of the drive power until reaching a target rotational speed from a predetermined rotational speed.
